# EUROPÄISCHE PATENTSCHRIFT

(11) **EP 0 988 677 B1**
(45) Veröffentlichungstag und Bekanntmachung des Hinweises auf die Patenterteilung: **09.09.2009**
(21) Anmeldenummer: 99924778.6
(22) Anmeldetag: 07.04.1999
(51) Int. Cl.: H02H 7/08

(54) **SICHERHEITSVORRICHTUNG FÜR EINEN ANTRIEB**
SAFETY DEVICE FOR A DRIVE MECHANISM
DISPOSITIF DE SECURITE POUR UN ENTRAINEMENT

(30) Priorität: 09.04.1998 DE 19816046
(43) Veröffentlichungstag der Anmeldung: 29.03.2000
(73) Patentinhaber: ROBERT BOSCH GMBH, 70442 Stuttgart (DE)
(72) Erfinder: BOESCHE, Guenther, D-64720 Michelstadt (DE); WEBER, Rupert, D-63936 Schneeberg (DE); KUNZ, Olaf, D-64689 Grasellenbach (DE)
(86) Internationale Anmeldenummer: PCT/DE1999/001029
(87) Internationale Veröffentlichungsnummer: WO 1999/053588

(56) Entgegenhaltungen:
- GB-A- 2 281 826

## Beschreibung

### Stand der Technik

Die Erfindung geht aus von einer Sicherheitsvorrichtung für einen Antrieb. Aus der DE 43 30 823 C2 ist eine Antriebsvorrichtung mit einer Sicherheitseinrichtung für den Sonderbetrieb bekannt. Hierbei ist zur Überwachung des Motors eine redundante Sicherheitseinrichtung vorgesehen, welche in einer Sonderbetriebsart die Drehzahl des Motors auf Einhaltung eines vorgegebenen Höchstwertes überwacht und die Energiezufuhr zum Motor unterbricht, wenn die Drehzahl größer ist als der vorgegebene Höchstwert. Zur Bestimmung der Drehzahl werden zwei verschiedene Signale in der Weise erfaßt, daß das erste Signal von einem Drehzahlsensor gewonnen wird, und das zweite Signal aus dem zeitlichen Verlauf des hierfür mittels eines weiteren Sensors erfaßten Stromes in wenigstens einer der Phasenzuleitungen zum Motor abgeleitet wird. Überschreitet die erfaßte Drehzahl einen vorgegebenen Höchstwert, wird die Energiezufuhr zum Motor durch Schalten eines einem Netzgleichrichter vorgeschalteten Leistungsschalters sowie durch zusätzliches Abschalten des Wechselrichters unterbrochen.

Die Aufgabe der Erfindung besteht darin, die Sicherheit von Antrieben weiter zu erhöhen.

Die Aufgabe wird gelöst mittels einer Sicherheitsvorrichtung gemäß Anspruch 1.

### Vorteile der Erfindung

Die erfindungsgemäße Sicherheitsvorrichtung für einen Antrieb weist eine Überwachungseinrichtung auf, die einen den Betriebszustand des Antriebs beschreibenden Meßwert dahingehend auswertet, ob zum Schutz des Antriebs anstelle eines Normalbetriebs ein Notbetrieb zu starten ist. Die Überwachungseinheit generiert zumindest ein erstes Ausgangssignal für ein die Energiezufuhr zu dem Motor beeinflussendes Stellelement. Die erfindungsgemäße Sicherheitsvorrichtung für einen Antrieb zeichnet sich dadurch aus, daß im Normalbetrieb als Ausgangssignal ein Wechselsignal und im Notbetrieb ein Gleichsignal verwendet ist. Durch die definierte Vorgabe der Form des Ausgangssignals entspricht das für den Notbetrieb bewußt herbeigeführt Gleichsignal auch dem Betriebszustand, der sich bei Kurzschluß oder Bruch der das Ausgangssignal übertragenden Leitung einstellt. Eine Signalüberwachung wird damit in die Lage versetzt, sowohl beim bewußt herbeigeführten Notbetrieb als auch bei einer durch Leitungsbruch oder Kurzschluß herbeigeführten kritischen Situation entsprechende Stellglieder im Sinne eines Notbetriebs anzusteuern. Auf eine separate Einrichtung zur Überwachung der Funktionstüchtigkeit der Leitung kann verzichtet werden.

Dem Stellelement ist eine signalüberwachung zugeordnet, die das Ausgangssignal überwacht und das Stellelement dann im Sinne eines Notbetriebs ansteuert, wenn es sich bei dem Eingangssignal, das bei ordnungsgemäßer Leitung mit dem Ausgangssignal übereinstimmt, um ein Gleichsignal handelt. Vorzugweise ist die Signalüberwachung in unmittelbarer räumlicher Nähe zu dem Stellelement angeordnet, um dadurch Signalübertragungsfehler zu minimieren.

In einer vorteilhaften Weiterbildung wird das Ausgangssignal über einen Bus übertragen. Die beschriebene Sicherheitsfunktion kann in der für den Austausch der Bussignale notwendigen Signalverarbeitung integriert sein. Eine entsprechende Hardware- oder Software-Realisierung erhöht den für den Betrieb des Bussystems ohnehin erforderlichen Elektronikaufwand nur unbeträchtlich.

Weitere zweckmäßige Weiterbildungen ergeben sich aus weiteren abhängigen Ansprüchen und der Beschreibung.

### Zeichnung

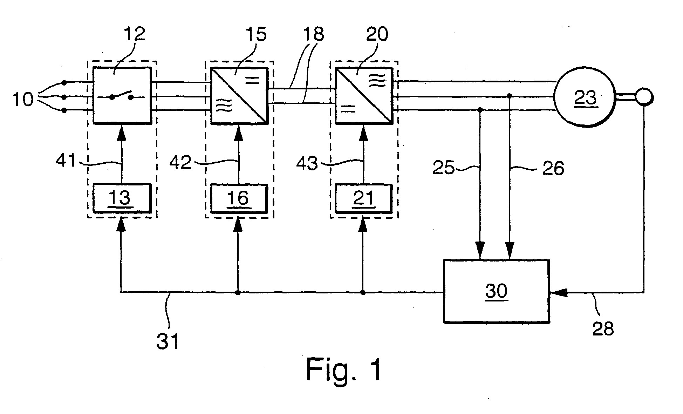

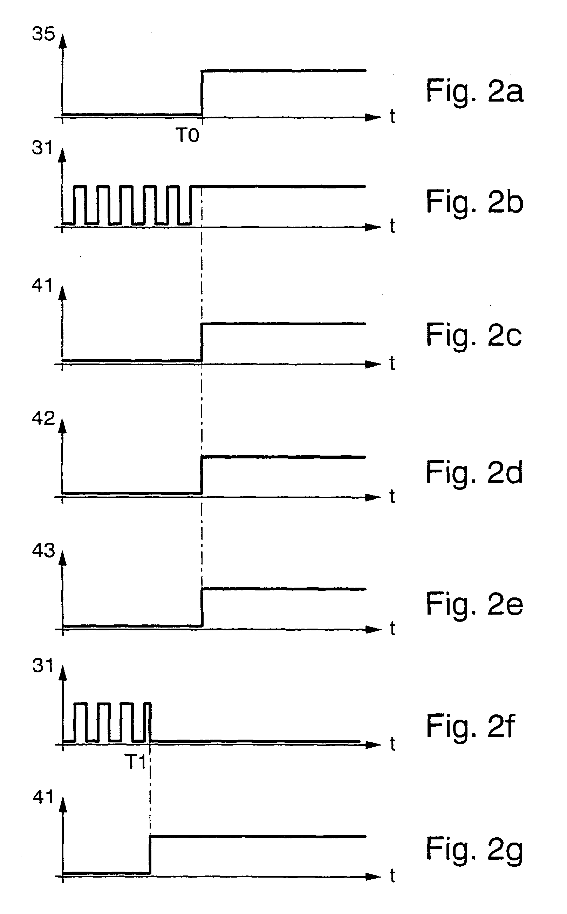

Ein Ausführungsbeispiel der Erfindung ist in der Zeichnung dargestellt und wird im folgenden näher beschrieben. Es zeigen Figur 1 ein Blockschaltbild sowie die Figuren 2a bis 2g sich einstellende Signalverläufe eines Ausführungsbeispiels der erfindungsgemäßen Sicherheitsvorrichtung für einen Antrieb.

Ein dreiphasiges Wechselstromnetz 10 ist über einen Leistungsschalter 12 mit einem Netzgleichrichter 15 verbunden. Der Netzgleichrichter 15 speist einen Gleichspannungszwischenkreis 18, dessen Gleichspannung ein Wechselrichter 20 in eine einen Antrieb 23 speisende Wechselspannung umrichtet. An einer ersten Antriebsleitung ist ein erster Strommeßwert 25, an einer zweiten Phasenleitung ein zweiter Strommeßwert 26 abgegriffen, die ebenso wie ein Drehzahlistwert 28 des Antriebs 23 einer Überwachungseinrichtung 30 zugeführt sind. Die Überwachungseinrichtung 30 erzeugt ein Ausgangssignal 31, das einer ersten Signalüberwachung 13 zugeführt ist. Die erste Signalüberwachung 13 erzeugt in Abhängigkeit von dem Ausgangssignal 31 ein erstes Notansteuersignal 41, das den Leistungsschalter 12 gegebenenfalls zu einer Schalthandlung veranlaßt. In Abhängigkeit von dem Ausgangssignal 31, bereitgestellt von der Überwachungseinrichtung 30, erzeugt eine zweite Signalüberwachung 16 ein zweites Notansteuersignal 42 für den Netzgleichrichter 15. In Abhängigkeit von dem Ausgangssignal 31, bereitgestellt von der Überwachungseinrichtung 30, stellt eine dritte Signalüberwachung 21 ein drittes Notansteuersignal 43 für den wechselrichter 20 zur Verfügung.

In der Überwachungseinrichtung 30 ist eine entsprechende Signalauswertung integriert, die anhand der Eingangssignale wie erster und zweiter Stromistwert 25, 26 und/oder Drehzahlistwert 28 entscheidet, ob ein Notbetrieb 35 zu starten ist. Übersteigen beispielsweise die erfaßten Meßwerte vorgegebene Größen - dies läßt den Schluß auf eine ungewollte Drehzahlüberschreitung zu - wird zu einem Zeitpunkt T0 der Notbetrieb 35 aktiviert, Fig. 2a. Beliebige weitere Größen, wie beispielsweise die Gleichspannungszwischenkreisspannung können eine Aktivierung des Notbetriebs 35 bewirken.

Im Normalbetrieb erzeugt die Überwachungseinrichtung 30 ein Wechselsignal als Ausgangssignal 31, wie in Figur 2b gezeigt. In dem Ausführungsbeispiel sind als Stellelemente der Leistungsschalter 12, der Netzgleichrichter 15 und der Wechselrichter 20 vorgesehen. Dem Leistungsschalter 12 ist eine erste Signalüberwachung 13 zugeordnet. Darin ist eine Auswerteelektronik integriert, die das Ausgangssignal 31 dahingehend überwacht, ob es sich bei dem eingehenden Ausgangssignal 31 um ein Wechselsignal oder ein Gleichsignal handelt. Bei einem eingehenden Wechselsignal schließt die erste Signalüberwachung 13 auf einen ordnungsgemäßen Betriebszustand des Antriebs 23 bzw. der entsprechenden Ansteuerung. Sobald jedoch das eingehende Ausgangssignal 31 als Gleichspannungssignal identifiziert wird, startet die erste Signalüberwachung 13 den Notbetrieb 35 für den Leistungsschalter 12, indem beispielsweise den Schutzschaltern als erste Notansteuersignale 41 ein Befehl zum Öffnen zugeleitet wird. Der jeweilige Notbetrieb 35 für das zugehörige Stellelement kann in jeder Signalüberwachung 13, 16, 21 in jeweils unterschiedlicher Weise abgelegt sein. Die Signalauswertung des eingehenden Ausgangssignals 31 geschieht jedoch bei allen Signalüberwachungen 13, 16, 21 in der gleichen Weise. Ein Gleichsignal wird als aktivierendes Ereignis eines Notbetriebs 35 interpretiert.

Durch die erfindungsgemäße Sicherheitsvorrichtung ist es möglich, auch weitere kritische Betriebszustände wie beispielsweise Leitungsbruch zu erfassen. Ein diesbezüglicher Signalverlauf des Ausgangssignals 31 und eines der zugehörigen Notansteuersignale 41 ist in Fig.2f bzw. Fig. 2g dargestellt. Zum Zeitpunkt T1 wird jedoch die das Ausgangssignal 31 den Signalüberwachungen 13, 16, 21 zuführende Leitung durch Gewalteinwirkung unterbrochen. Dadurch fällt der Pegel des Ausgangssignals 31 auf Nullniveau. Die Signalüberwachungen 13, 16, 21 erkennen, daß es sich um ein Gleichsignal handelt. Gemäß Fig. 2g aktiviert die beispielhaft herausgegriffene erste Signalüberwachung 13 über das Notansteuersignal 41 den Leistungsschalter 12 in Form eines Notbetriebs 35. In ähnlicher Weise wird verfahren, wenn die Leitung einen Kurzschluß aufweist. Wiederum ergibt sich anstelle des mit dem Normalbetrieb korrespondierenden Wechselsignals ein Gleichsignal, das von der Signalüberwachung 13, 16, 21 wiederum im Sinne eines Notberiebs 35 ausgewertet wird.

Es sind weitere beliebige Ausgestaltungen möglich. So können die Ausgangssignal 31, 32, 33 beispielsweise auch über ein Bussystem übertragen werden. Dadurch wird ein bidirektionaler Datenaustausch möglich. Grundsätzlich können die Stellelemente 12, 15, 20 in der Weise verdrahtet sein, daß sie auch untereinander Signale austauschen, die in der beschriebenen Weise überwacht werden. Auch ist es möglich, die Überwachungseinrichtung 30 in der Steuerung für den Wechselrichter 20 zu integrieren. Denn die zugeführten Größen wie erster Stromistwert, zweiter Stromistwert 25, 26 und Drehzahlistwert 28 finden auch in der zugehörigen Regelung des Wechselrichters 20 Verwendung.

In gleicher Weise können auch Einganssignale wie "Sonderbetrieb" übertragen werden, um mehrere Überwachungseinrichtungen 30 gleichzeitig zu aktivieren.

## Patentansprüche

1. Sicherheitsvorrichtung für einen Antrieb, mit einer Überwachungseinrichtung (30), die eine dem Betriebszustand des Antriebs (23) beschreibende Größe (25, 26, 28) dahingehend auswertet, ob zum Schutz des Antriebs (23) anstelle eines Normalbetriebs ein Notbetrieb (35) zu starten ist, wobei die Überwachungseinrichtung (30) zumindest ein erstes AusgangsSignal (31) generiert für ein die Energiezufuhr zu dem Antrieb (23) beeinflussendes Stellelement (12, 15, 20), **dadurch gekennzeichnet, daß** im Normalbetrieb ein wechselsignal und im Notbetrieb (35) ein Gleichsignal als das Ausgangssignal (31) verwendet werden, wobei
dem Stellelement (12, 15, 20) eine Signalüberwachung (13, 16, 21) zugeordnet ist, die das Ausgangssignal (31) überwacht und das Stellelement (12, 15, 20) dann im Sinne eines Notbetriebs (35) ansteuert, wenn es sich bei dem Ausgangssignal (31) um ein Gleichsignal handelt.

2. Vorrichtung nach einem der vorhergehenden Ansprüche, **dadurch gekennzeichnet, daß** das Ausgangssignal (31) über einen Bus übertragen wird.

3. Vorrichtung nach einem der vorhergehenden Ansprüche, **dadurch gekennzeichnet, daß** als Stellelement ein Leistungsschalten (12) und/oder ein Netzgleichrichter (15) und/oder ein Wechselrichter (20) verwendet sind.

4. Vorrichtung nach einem der vorhergehenden Ansprüche, **dadurch gekennzeichnet, daß** in der Signalüberwachung (13, 16, 21) ein Notprogramm für das Stellelement (12, 15, 20) abgelegt ist.

5. Vorrichtung nach einem der vorhergehenden Ansprüche, **dadurch gekennzeichnet, daß** der Antrieb ein elektrischer Antrieb ist, vorzugsweise ein elektrischer Antrieb am dreiphasigen Wechselstromnetz.

## Claims

1. Safety apparatus for a drive, having a monitoring device (30) which evaluates a variable (25, 26, 28) which describes the operating state of the drive, in order to determine whether a standby mode (35) should be started instead of a normal mode in order to protect the drive (33), with the monitoring device (30) generating at least one first output signal (31) for an actuating element (12, 15, 20) which influences the power supply to the drive (23), **characterized in that,** an alternating signal is used as the output signal (31) in the normal mode, and a constant signal is used as the output signal (31) in the standby mode (35), with the actuating element (12, 15, 20) having an associated signal monitoring (13, 16, 21) which monitors the output signal (31) and then drives the actuating element (12, 15, 20) in the sense of a standby mode (35) when the output signal (31) is a constant signal.

2. Apparatus according to one of the preceding claims, **characterized in that** the output signal (31) is transmitted via a bus.

3. Apparatus according to one of the preceding claims, **characterized in that** a power switch (12) and/or a mains rectifier (15) and/or an inverter (20) are/is used as actuating element.

4. Apparatus according to one of the preceding claims, **characterized in that** a standby program for the actuating element (12, 15, 20) is stored in the signal monitoring (13, 16, 21).

5. Apparatus according to one of the preceding claims, **characterized in that** the drive is an electrical drive, preferably an electrical drive on the three-phase alternating current system.

## Revendications

1. Dispositif de sécurité d'un moyen d'entraînement comportant une installation de surveillance (30) qui exploite en permanence une grandeur (25, 26, 28) décrivant l'état de fonctionnement du moyen d'entraînement (23), pour démarrer un fonctionnement de secours (35) à la place du mode de fonctionnement normal pour protéger le moyen d'entraînement (23),
l'installation de surveillance (30) générant au moins un premier signal de sortie (31) pour un élément de réglage (12, 15, 20) influençant l'alimentation en énergie du moyen d'entraînement (23),
**caractérisé en ce que**
en mode de fonctionnement normal, on utilise un signal alternatif et en mode de fonctionnement de secours (35) on utilise un signal continu comme signal de sortie (31),
le moyen de surveillance de signal (13, 16, 21) étant associé à l'élément de réglage (12, 15, 20) pour surveiller le signal de sortie (31) et commander l'élément de réglage (12, 15, 20) dans le sens du mode de fonctionnement de secours (35) si le signal de sortie (31) est un signal continu.

2. Dispositif selon la revendication 1,
**caractérisé en ce que**
le signal de sortie (31) est transmis par un bus.

3. Dispositif selon l'une des revendications précédentes,
**caractérisé en ce que**
l'élément de réglage est un commutateur de puissance (12) et/ou un redresseur de courant de réseau (15) et/ou un onduleur (20).

4. Dispositif selon l'une des revendications précédentes,
**caractérisé en ce qu'**
un programme de secours pour l'élément de réglage (12, 15, 20) est enregistré dans le moyen de surveillance de signal (13, 16, 21).

5. Dispositif selon l'une des revendications précédentes,
**caractérisé en ce que**
le moyen d'entraînement est un moyen d'entraînement électrique, de préférence un moyen d'entraînement électrique relié à un réseau alternatif triphasé.
